# EUROPEAN PATENT SPECIFICATION

(11) **EP 4 375 208 B1**
(45) Date of publication and mention of the grant of the patent: **09.07.2025**
(21) Application number: 23211297.9
(22) Date of filing: 21.11.2023
(51) Int. Cl.: B65D 39/00, C08L 75/06, C08G 18/36, C08G 18/73, C08G 18/75, C08G 18/79, C09J 175/06, C08G 18/78, C08G 18/72

(54) **VEGETABLE OIL-BASED BINDER AND AGGLOMERATED CORK STOPPER COMPRISING THE SAME**
BINDEMITTEL AUF PFLANZENÖLBASIS UND AGGLOMERIERTER KORKSTOPFEN, DIESES BEINHALTEND
LIANT À BASE D'HUILE VÉGÉTALE ET BOUCHON EN LIÈGE AGGLOMÉRÉ LE COMPRENANT

(30) Priority: 22.11.2022 PT 2022118352
(43) Date of publication of application: 29.05.2024
(73) Proprietor: Amorim Cork Research, Lda., 4535-186 Mozelos (PT); Fabrires - Produtos Químicos, S.A., 7080-341 Vendas Novas (PT)
(72) Inventor: CABRITA, LUÍS MANUEL ESTÊVÃO, 4535-186 MOZELOS (PT); DOS SANTOS PEREIRA, MIGUEL GUERREIRO, 7080-341 VENDAS NOVAS (PT)
(74) Representative: RCF - Protecting Innovation, S.A.

(56) References cited:
- CN-A- 104 119 494
- US-A1- 2005 173 830
- US-A1- 2015 073 089

## Description

### FIELD OF THE INVENTION

The present invention relates to a binder consisting of a vegetable oil fraction comprising grape seed oil, and of another fraction of aliphatic isocyanates. This binder finds particular application in the cork area, namely in the production of agglomerated cork stoppers, and other composites comprising agglomerated cork, such as flooring, coverings, insulations, construction, works of art and design, automotive and aerospace components, sports surfaces, transportation, furniture, clothing and footwear. The invention is set out in the appended set of claims.

### BACKGROUND OF THE INVENTION

The preparation of a polyurethane binder is usually obtained through the reaction between an isocyanate and a polyol. Chemically, the reaction takes place between the NCO groups, present in the isocyanate, and the hydroxyl groups (-OH) specific to the polyols. However, the reaction can take place between an isocyanate and any chemical compound that presents said OH groups (such as, for example, glycol, oil, alcohol or even water). Polyols are normally used due to their high molecular weight and the intrinsic properties (mechanical resistance, flexibility) that they confer to the final product.

Polyurethane binders currently used in industry usually present aromatic isocyanates and polyols of petrochemical origin as raw materials. Although this type of binder is perfectly adapted to most industrial processes, they have the disadvantage of being products whose raw materials are, for the most part, of petrochemical origin and, in addition, some of the aromatic isocyanates that compose them are classified as potentially carcinogens.

Alternatively, there is a growing demand and development of binders of vegetable origin, as mentioned by Heinrich, L. in "Future opportunities for bio-based adhesives - advantages beyond renewability", Green Chem., 2019, 21,1866. This type of binder results from the reaction of an aliphatic isocyanate with a polyol of vegetable origin, normally a vegetable oil. Vegetable oils normally used are castor oil, soybean oil, sunflower oil, avocado oil, almond oil, jojoba oil, linseed oil and palm oil.

This type of binder already exists on the market: as a prepolymer (commonly referred to as "single-component binder"), that is, in which all components of the binder have already been premixed during its production; or as a binder that requires mixing of the components *in situ* immediately before its use (commonly referred to as a "two-component binder"), as the isocyanate and polyol are supplied to the customer in separate compartments (or tubes) of a package. However, both solutions available on the market ("single-component" and "two-component") have disadvantages.

Consider, single-component vegetable binders have a high isocyanate-free monomer content, which causes occupational health problems and is irritating for users who handle this type of binder; and limitations in the content of raw material of vegetable origin in the order of 60%, that is, the increase in the percentage of vegetable polyol in the binder composition causes an uncontrolled increase in viscosity, and this binder ends up gelling in a short time, preventing its short and medium term use. Such viscosity levels make pumping and mixing/application with other products difficult.

In the case of two-component vegetable binders, it is possible to supply isocyanates that have very low free monomer contents (without impact on the user). Another advantage is that they have a relatively high percentage of vegetable raw material (approximately 70%). As the two components are mixed immediately before use/application thereof, there are no viscosity problems with this type of binders. However, the use of isocyanates with low levels of free monomer in conjunction with high percentages of vegetable oils (above 50%) means that there are not enough isocyanate groups (NCO) to react with all the hydroxyl (OH) groups present in the oil, which means that part of the oil will not be polymerized. Thus, the excess oil, which has not reacted, remains free and can migrate in significant amounts, changing the properties of the product with which it is in contact.

One of the areas where this problem is well known is that of cork stoppers. The use of a two-component binder means that the unreacted oil becomes trapped in the composite that makes up the stopper and, when in contact with wine or another food product, may migrate and alter its organoleptic characteristics. These problems have already caused severe and costly complaints.

Thus, a two-component system that requires the mixing of components *in situ* immediately before use, although very interesting in theory, presents this shortcoming that conditions its use with various types of products.

Patent EP 3081600 B1 relates to an agglutinant of vegetable origin based on oil, modified vegetable resin and, optionally, a thermal stabilizer. This document shows the presence of vegetable oil in the plasticizer fraction, which translates into severe limitations on the amount of oil that can be present, since for vegetable oil values above 15%, there is danger of migration as explained above for two-component binders.

US 20150073089 A1 relates to a molding comprising pellets of plant-based raw materials having a particle size from 0.5 to 15 mm, bonded with a two-component polyurethane adhesive, said adhesive comprising a mixture of a polyol component and an isocyanate component comprising oligomers of aliphatic isocyanates. Preferably, the pellets of plant-based raw materials are cork pellets.

CN 104119494 A1 discloses a preparation method of bio-based polyhydric alcohol, which comprises the steps of: stirring and mixing bio-oil with a polyhydroxy compound according to the mass ratio of 1:0.2 to 1:1.5 at first, adding a solid alkali catalyst, the mass of which is 0.5-2% of the total mass of reactants, heating and stirring at 60-200 DEG C for 2-24 h, cooling, filtering, and eliminating the solid alkali catalyst, thereby obtaining bio-based polyhydric alcohol. The bio-based polyhydric alcohol prepared by the method of the invention is wide in purpose and can be used for replacing the traditional petroleum-based polyhydric alcohol and in the fields of polyurethane foam, adhesives, polyurethane coatings and surface active agents.

There is thus a need to develop a binder that overcomes the problems mentioned above.

### SUMMARY OF THE INVENTION

The present invention provides a vegetable oil-based binder, the binder consisting of:
a) 65% to 77% by mass of a vegetable oil fraction; and
b) 23% to 35% by mass of an aliphatic isocyanate fraction,
wherein said vegetable oil fraction comprises at least 1% by mass of grape seed oil.

In an embodiment, the vegetable oil fraction is 65% to 72% by mass and the isocyanate fraction is 28% to 35% by mass.

In another embodiment, the vegetable oil fraction is 72% to 75% by mass and the isocyanate fraction is 25% to 28% by mass.

Preferably, the vegetable oil fraction is 73% by mass and the isocyanate fraction is 27% by mass.

Most preferably, the vegetable oil fraction is 67% by mass and the isocyanate fraction is 33% by mass.

In yet another embodiment, the vegetable oil fraction solely comprises grape seed oil or, in other words, comprises 100% by mass of grape seed oil.

Preferably, the vegetable oil fraction comprises 5% to 11% by mass of grape seed oil, more preferably 12% to 21% by mass of grape seed oil, even more preferably 16% to 21% by mass of grape seed oil and most preferably 21% by mass of grape seed oil.

In a preferred embodiment of the invention, said aliphatic isocyanates are selected from the group comprising isophorone diisocyanate (IPDI), the hexamethylene diisocyanate (HDI), pentamethylene diisocyanate (PDI), dicyclohexylmethane diisocyanate (HMDI) and combinations thereof and trimers and biurets thereof.

In another aspect of the invention, the vegetable oil fraction comprises grape seed oil in combination with an oil selected from the group comprising castor oil, soybean oil, sunflower oil, avocado oil, almond oil, jojoba oil, linseed oil and combinations thereof.

The present invention also relates to the use of the binder of the invention in the production of agglomerated cork stoppers and in the production of agglomerated cork composites.

The invention further relates to an agglomerated cork stopper comprising the binder of the invention as described above.

### DETAILED DESCRIPTION OF THE INVENTION

The present invention relates to a binder consisting of a vegetable oil fraction, comprising grape seed oil, and of another fraction of aliphatic isocyanates.

In the context of the present description, the term "comprising" should be understood as "including, among others". As such, said term should not be interpreted as "consisting only of".

It should be noted that any X value presented in the course of the present description should be interpreted as an approximate value of the real vale X, since such approximation to the real value would be reasonably expected by the skilled in the art due to experimental and/or measurement conditions to introduce deviations from the real value.

Unless otherwise noted, the value ranges set out in the present description are intended to provide a simplified, technically accepted way to indicate each individual value within the respective range. By way of example, the expression "25% to 28%" means any value within this range, for example 25.0%; 25.1%; 25.2%; ... 27.8%; 27.9%; 28.0%. All values mentioned in the present description must be interpreted as approximate values, for example the reference to "67%" means "around 67%".

In the context of the present invention, all percentages are mass percentages.

By "vegetable oil-based binder" is understood a binder that contains mainly vegetable oil in its mass composition. In particular, in the case of the present invention, it is understood as a binder that contains from 65% to 77% by mass of a vegetable oil fraction.

In the present invention, by "vegetable oil fraction" is understood a constituent part (or in other words, a component) of the binder, which is formed by one or more oils of vegetable origin, which are made up of mixtures of triacylglycerols. Preferably, the vegetable oils of the invention are selected from the group comprising castor oil, soybean oil, grape seed oil, sunflower oil, avocado oil, almond oil, jojoba oil, linseed oil and combinations thereof.

"NCO" is understood as the reactive group of isocyanates and "NCO %" is understood as the isocyanate content that results from the sum of the free monomer and the NCO groups that are already in the form of a polymer and that have not yet reacted completely, to be divided by the total mass of binder.

By "agglomerated cork" is understood a composite resulting from an agglomeration process between cork granules and a binder, with the cork granules having a particle size that typically varies between 0.25 and 8 mm.

By "agglomerated cork stoppers" or "agglomerated stoppers" is understood stoppers obtained by agglomerating cork granules with dimensions between 0.25 and 8 mm as defined in ISO 633 standard and the International Code of Cork Stopper Manufacturing Practices.

Stoppers referred to as "microagglomerated cork stoppers" or "microagglomerated stoppers" correspond to a subgroup of agglomerated cork stoppers in which the cork granules used in their production have dimensions (particle size) between 0.25 and 3 mm.

The present invention relates to a binder consisting of:
a) 65% to 77% by mass of a vegetable oil fraction; and
b) 23% to 35% by mass of an aliphatic isocyanate fraction,
wherein said vegetable oil fraction comprises at least 1% grape seed oil.

It was surprisingly found that the presence of grape seed oil in the vegetable oil fraction did not give the binder its usual behavior and the expected increased viscosity. On the contrary, it was found that with grape seed oil the binder presents a reduction in viscosity while at the same time there is a decrease in the free NCO content.

The binder of the present invention is a prepolymer that can be used even after long periods of storage, having been found that the binder remains functional even after 9 months of storage. The binder of the invention has a high content of vegetable matter (between 65% and 77% by weight) compared to prepolymers known in the state of the art, which typically contain up to 15% vegetable matter, such as vegetable oils.

Furthermore, with the addition of grape seed oil to the binder composition, it was possible to significantly reduce the amount of aliphatic isocyanates compared to the mass usually present in known binders, and consequently, the amount of free isocyanate monomer. In this way, the industrial handling and use of the binder with lower risks of negative impact on the user's health is possible.

Additionally, it was found that the addition of grape seed oil allows a significant reduction in the viscosity of the binder when compared to similar products (vegetable oil-based binders) free of grape seed oil.

It was also confirmed that the binder of the present invention does not alter the intrinsic properties of the product with which it comes into contact.

Grape seed oil is therefore essential to obtain a vegetable oil-based binder that solves the problems identified in binders already known in the art. This binder completely excludes any polyols of petrochemical origin (hydrocarbon-based) from its composition, which results in a huge positive impact in environmental terms.

In a preferred embodiment, the aliphatic isocyanates are selected from the group comprising isophorone diisocyanate (IPDI), hexamethylene diisocyanate (HDI), pentamethylene diisocyanate (PDI), dicyclohexylmethane diisocyanate (HMDI), combinations thereof and trimers and biurets thereof.

In an embodiment, the vegetable oil fraction is 65% to 72% by mass and the isocyanate fraction is 28% to 35% by mass.

In another embodiment, the vegetable oil fraction is 72% to 75% by mass and the isocyanate fraction is 25% to 28% by mass.

Preferably, the vegetable oil fraction is 73% by mass and the isocyanate fraction is 27% by mass.

Most preferably, the vegetable oil fraction is 67% by mass and the isocyanate fraction is 33% by mass.

According to the invention, the percentage of grape seed oil in the vegetable oil fraction can vary between 1% and 100% by mass, preferably between 12% and 21% by mass, more preferably, between 16% and 21% by mass, and most preferably it is 21% by mass.

In a preferred embodiment, the vegetable oil fraction is made of a mixture, in mass percentage per vegetable oil fraction, of 73.13% castor oil, 16.42% of sunflower oil and 10.45% of grape seed oil.

### EXAMPLES

The binders of the present invention have been tested in different applications.

The binders of the invention proved to be particularly suitable for applications in the cork sector, in particular, in the production of cork stoppers and other composites comprising cork, namely, flooring, coverings and insulation and construction.

The 15 examples presented below refer to binders according to the present invention that were used and tested in the production of agglomerated cork stoppers.

It should be noted that agglomerated cork stoppers, due to the loads to which they are subjected during their normal use, constitute the most demanding case (in terms of maintaining their structural integrity) of application in the cork sector.

### Example 1

| **Fraction** | **Component** | **mass % / component fraction** | **total mass % in the binder** |
|---|---|---|---|
| vegetable oil | Castor oil | 57.14 | 40 |
| | Sunflower oil | 28.57 | 20 |
| | Grape seed oil | 14.29 | 10 |
| | Total | 100 | **70** |
| aliphatic isocyanates | isophorone diisocyanate (IPDI) | 33.33 | 10 |
| | hexamethylene diisocyanate (HDI) | 66.67 | 20 |
| | Total | 100 | **30** |
| **Total** | | | **100** |

### Example 2

### (continued)

| **Fraction** | **Component** | **mass % / component fraction** | **total mass % in the binder** |
|---|---|---|---|
| vegetable oil | Castor oil | 61.43 | 43 |
| | Sunflower oil | 17.14 | 12 |
| | Grape seed oil | 21.43 | 15 |
| | Total | 100 | **70** |
| aliphatic isocyanates | isophorone diisocyanate (IPDI) | 36.67 | 11 |
| | hexamethylene diisocyanate (HDI) | 63.33 | 19 |
| | Total | 100 | **30** |
| **Total** | | | **100** |

### Example 3

| **Fraction** | **Component** | **mass % / component fraction** | **total mass % in the binder** |
|---|---|---|---|
| vegetable oil | Castor oil | 73.13 | 49 |
| | Sunflower oil | 16.42 | 11 |
| | Grape seed oil | 10.45 | 7 |
| | Total | 100 | **67** |
| aliphatic isocyanates | isophorone diisocyanate (IPDI) | 33.33 | 11 |
| | hexamethylene diisocyanate (HDI) | 66.67 | 22 |
| | Total | 100 | **33** |
| **Total** | | | **100** |

### Example 4

| **Fraction** | **Component** | **mass % / component fraction** | **total mass % in the binder** |
|---|---|---|---|
| vegetable oil | Castor oil | 72.31 | 47 |
| | Sunflower oil | 18.46 | 12 |
| | Grape seed oil | 9.23 | 6 |
| | Total | 100 | **65** |
| aliphatic isocyanates | isophorone diisocyanate (IPDI) | 34.29 | 12 |
| | hexamethylene diisocyanate (HDI) | 65.71 | 23 |
| | Total | 100 | **35** |
| **Total** | | | **100** |

### Example 5

### (continued)

| **Fraction** | **Component** | **Mass percentage per component fraction** | **Total mass percentage in the binder** |
|---|---|---|---|
| vegetable oil | Castor oil | 61.11 | 44 |
| | Sunflower oil | 22.22 | 16 |
| | Grape seed oil | 16.67 | 12 |
| | Total | 100 | **72** |
| aliphatic isocyanates | isophorone diisocyanate (IPDI) | 28.57 | 8 |
| | hexamethylene diisocyanate (HDI) | 71.43 | 20 |
| | Total | 100 | **28** |
| **Total** | | | **100** |

### Example 6

| **Fraction** | **Component** | **Mass percentage per component fraction** | **Total mass percentage in the binder** |
|---|---|---|---|
| vegetable oil | Castor oil | 64.00 | 48 |
| | Sunflower oil | 21.33 | 16 |
| | Grape seed oil | 14.67 | 11 |
| | Total | 100 | **75** |
| aliphatic isocyanates | isophorone diisocyanate (IPDI) (continued) | 28.00 | 7 |
| | hexamethylene diisocyanate (HDI) | 72.00 | 18 |
| | Total | 100 | **25** |
| **Total** | | | **100** |

### Example 7

| **Fraction** | **Component** | **mass % / component fraction** | **total mass % in the binder** |
|---|---|---|---|
| vegetable oil | Castor oil | 61.04 | 47 |
| | Sunflower oil | 23.38 | 18 |
| | Grape seed oil | 15.58 | 12 |
| | Total | 100 | **77** |
| aliphatic isocyanates | isophorone diisocyanate (IPDI) | 34.78 | 8 |
| | dicyclohexylmethane diisocyanate (HMDI) | 43.48 | 10 |
| | hexamethylene diisocyanate (HDI) | 21.74 | 5 |
| | Total | 100 | **23** |
| **Total** | | | **100** |

### Example 8

| **Fraction** | **Component** | **mass % / component fraction** | **total mass % in the binder** |
|---|---|---|---|
| vegetable oil | Castor oil | 70.27 | 52 |
| | Sunflower oil | 17.57 | 13 |
| | Grape seed oil | 12.16 | 9 |
| | Total | 100 | **74** |
| aliphatic isocyanates | pentamethylene diisocyanate (PDI) | 100 | 26 |
| | Total | 100 | **26** |
| **Total** | | | **100** |

### Example 9

| **Fraction** | **Component** | **mass % / component fraction** | **total mass % in the binder** |
|---|---|---|---|
| vegetable oil | Castor oil | 61.64 | 45 |
| | Sunflower oil | 19.18 | 14 |
| | Grape seed oil | 19.18 | 14 |
| | Total | 100 | **73** |
| aliphatic isocyanates | isophorone diisocyanate (IPDI) | 37.04 | 10 |
| | hexamethylene diisocyanate (HDI) | 62.96 | 17 |
| | Total | 100 | **27** |
| **Total** | | | **100** |

### Example 10

| **Fraction** | **Component** | **mass % / component fraction** | **total mass % in the binder** |
|---|---|---|---|
| vegetable oil | Castor oil | 63.38 | 45 |
| | avocado oil | 19.72 | 14 |
| | Grape seed oil | 16.90 | 12 |
| | Total | 100 | **71** |
| aliphatic isocyanates | isophorone diisocyanate (IPDI) | 31.03 | 9 |
| | hexamethylene diisocyanate (HDI) | 68.97 | 20 |
| | Total | 100 | **29** |
| **Total** | | | **100** |

### Example 11

| **Fraction** | **Component** | **mass % / component fraction** | **total mass % in the binder** |
|---|---|---|---|
| vegetable oil | Castor oil | 60.00 | 42 |
| | Jojoba oil | 8.57 | 6 |
| | Sunflower oil | 11.43 | 8 |
| | Grape seed oil | 20.00 | 14 |
| | Total | 100 | **70** |
| aliphatic isocyanates | isophorone diisocyanate (IPDI (continued) | 33.33 | 10 |
| | hexamethylene diisocyanate (HDI) | 66.67 | 20 |
| | Total | 100 | **30** |
| **Total** | | | **100** |

### Example 12

| **Fraction** | **Component** | **mass % / component fraction** | **total mass % in the binder** |
|---|---|---|---|
| vegetable oil | Grape seed oil | 100.00 | 70 |
| | Total | 100 | **70** |
| aliphatic isocyanates | isophorone diisocyanate (IPDI) | 40.00 | 12 |
| | hexamethylene diisocyanate (HDI) | 60.00 | 18 |
| | Total | 100 | **30** |
| **Total** | | | **100** |

### Example 13

| **Fraction** | **Component** | **mass % / component fraction** | **total mass % in the binder** |
|---|---|---|---|
| vegetable oil | Grape seed oil | 100.00 | 74 |
| | Total (continued) | 100 | **74** |
| aliphatic isocyanates | isophorone diisocyanate (IPDI) | 38.46 | 10 |
| | hexamethylene diisocyanate (HDI) | 61.54 | 16 |
| | Total | 100 | **26** |
| **Total** | | | **100** |

### Example 14

| **Fraction** | **Component** | **mass % / component fraction** | **total mass % in the binder** |
|---|---|---|---|
| vegetable oil | Grape seed oil | 100.00 | 77 |
| | Total | 100 | **77** |
| aliphatic isocyanates | isophorone diisocyanate (IPDI) | 39.13 | 9 |
| | hexamethylene diisocyanate (HDI) | 60.87 | 14 |
| | Total | 100 | **23** |
| **Total** | | | **100** |

### Example 15

| **Fraction** | **Component** | **mass % / component fraction** | **total mass % in the binder** |
|---|---|---|---|
| vegetable oil | Castor oil | 80.43 | 56 |
| | Sunflower oil | 18.57 | 13 |
| | Grape seed oil | 1.00 | 1 |
| | Total | 100 | **70** |
| aliphatic isocyanates | isophorone diisocyanate (IPDI) | 40.00 | 12 |
| | hexamethylene diisocyanate (HDI) | 60.00 | 18 |
| | Total | 100 | **30** |
| **Total** | | | **100** |

Other formulations were made based on examples 3, 4, 6 and 7, wherein castor and sunflower oils were respectively replaced by soybean and almond oil, in the same proportions.

Another formulation was also carried out, based on example 11, wherein castor, jojoba and sunflower oils were respectively replaced by soybean, linseed and almond oil, in the same proportions.

All the binders from the previous examples were used in the production of batches of agglomerated cork stoppers.

The compliance of the corks produced with the ISO 16420, NP 4351, ISO 4710 and NP 4571 Standards, which apply to agglomerated and microagglomerated stoppers with cork material, was assessed.

It was possible to conclude that the use of the binders characterized in the previous examples 1 to 15 provided batches of agglomerated cork stoppers that were in compliance with the aforementioned applicable standards (in the Cork Industry).

To that extent, the stoppers produced with the binders of examples 1 to 15 were tested in order to assess their suitability in bottles of different beverages that require the use of sealants (stoppers) with different technical requirements, for example, among others, dimensional, density, dust release and extraction force requirements.

In the following Table 1, results are presented regarding the suitability of stopers produced with the binders of examples 1 to 15. These results are expressed qualitatively, for simplification and better understanding, in the following way:
+ for stoppers suitable for still wines;
++ for stoppers suitable for still and spirit wines;
+++ for stoppers suitable for still, spirited and sparkling wines.

For greater clarity and understanding, the mass percentages of vegetable oil and aliphatic isocyanate fractions, as well as grape seed oil, are indicated in following Table 1, regarding the examples to which they refer. The dimensions of the cork granules used in the stoppers produced and subjected to the aforementioned suitability tests are also indicated.

**Table 1**

| **Binder** | **Vegetable Oil Fraction** | | **Aliphatic isocyanat e fraction** | **Microagglomerat ed stoppers (0.25-3 mm)** | **Agglomerat ed stoppers (3-8 mm)** |
|---|---|---|---|---|---|
| | **%fractio n** | **%OGU *** | **%fraction** | | |
| Exampl e 1 | 70 | 14.29 | 30 | +++ | +++ |
| Exampl e 2 | 70 | 21.43 | 30 | +++ | +++ |
| Exampl e 3 | 67 | 10.45 | 33 | +++ | +++ |
| Exampl e 4 | 65 | 9.23 | 35 | +++ | +++ |
| Exampl e 5 | 72 | 16.67 | 28 | +++ | +++ |
| Exampl e 6 | 75 | 14.67 | 25 | ++ | + |
| Exampl e 7 | 77 | 15.58 | 23 | +++ | ++ |
| Exampl e 8 | 74 | 12.16 | 26 | ++ | ++ |
| Exampl e 9 | 73 | 19.18 | 27 | +++ | ++ |
| Exampl e 10 | 71 | 16.90 | 29 | ++ | ++ |
| Exampl e 11 | 70 | 20.00 | 30 | ++ | ++ |
| Exampl e 12 | 70 | 100.0 0 | 30 (continued) | + | + |
| Exampl e 13 | 74 | 100.0 0 | 26 | + | + |
| Exampl e 14 | 77 | 100.0 0 | 23 | + | + |
| Exampl e 15 | 70 | 1.00 | 30 | +++ | +++ |

| | | | | | |
|---|---|---|---|---|---|
| * -%OGU means mass percentage of grape seed oil in the vegetable oil fraction. | | | | | |

As verified, the binders of the invention proved to be suitable for the production of agglomerated cork stoppers (which in the tests showed their suitability for sealing still wines, sparkling wines and wines and spirits), which constitute one of the most demanding applications in the Cork industry with regard to its structural integrity requirements.

Binders in which castor and sunflower oils were respectively replaced by soybean and almond oils, in the same proportions, and in which castor, jojoba, and sunflower oils were respectively replaced by soybean, linseed and almond oils, in the same proportions, also gave results similar to those indicated for the examples 3, 4, 6, 7 and 11 in the production of agglomerated cork stoppers, as well as in the suitability assays of the stoppers thus produced.

Other assays were carried out with binders whose formulations included vegetable oil and aliphatic isocyanate fractions outside the ranges disclosed and claimed herein. Such binders gave rise to agglomerated cork stoppers that did not meet the necessary compliance with Industry Standards, revealing a deficient structural integrity compared to the minimum requirements required by the Industry.

## Claims

1. Vegetable oil-based binder, **characterized in that** it consists of:
a) 65% to 77% by mass of a vegetable oil fraction; and
b) 23% to 35% by mass of a fraction of aliphatic isocyanates, wherein said vegetable oil fraction comprises at least 1% by mass of grape seed oil.

2. Binder according to claim 1, **characterized in that** the vegetable oil fraction is 65% to 72% by mass and the isocyanate fraction is 28% to 35% by mass

3. Binder according to claim 2, **characterized in that** the vegetable oil fraction is 67% by mass and the isocyanate fraction is 33% by mass.

4. Binder according to claim 1, **characterized in that** the vegetable oil fraction is 72% to 75% by mass and the isocyanate fraction is 25% to 28% by mass.

5. Binder according to claim 4, **characterized in that** the vegetable oil fraction is 73% by mass and the isocyanate fraction is 27% by mass.

6. Binder according to claim 1, **characterized in that** said vegetable oil fraction consists of grape seed oil.

7. Binder according to claim 1, **characterized in that** said vegetable oil fraction comprises 5% to 11% by mass of grape seed oil.

8. Binder according to claim 1, **characterized in that** said vegetable oil fraction comprises 12% to 21% by mass of grape seed oil.

9. Binder according to claim 3 or claim 5, **characterized in that** said vegetable oil fraction comprises 16% to 21% by mass of grape seed oil.

10. Binder according to claim 9, **characterized in that** the vegetable oil fraction comprises 21% by mass of grape seed oil.

11. Binder according to claim 1, **characterized in that** the aliphatic isocyanates are selected from the group consisting of isophorone diisocyanate (IPDI), the hexamethylene diisocyanate (HDI), pentamethylene diisocyanate (PDI), dicyclohexylmethane diisocyanate (HMDI) and combinations thereof and trimers and biurets thereof.

12. Binder according to claim 1, **characterized in that** the vegetable oil fraction comprises grape seed oil in combination with an oil selected from the group consisting of castor oil, soybean oil, sunflower oil, avocado oil, almond oil, jojoba oil, linseed oil and combinations thereof.

13. Use of the binder according to any one of claims 1 to 12, **characterized in that** it applies in the production of agglomerated cork stoppers.

14. Use of the binder according to any one of claims 1 to 12, **characterized in that** it applies in the production of agglomerated cork composites.

15. Agglomerated cork stopper, **characterized in that** it comprises the binder claimed in any one of claims 1 to 12.

## Patentansprüche

1. Bindemittel auf Pflanzenölbasis, **dadurch gekennzeichnet, dass** es aus:
a) 65 bis 77 Massenprozent einer Pflanzenölfraktion; und
b) 23 bis 35 Massenprozent einer Fraktion aliphatischer Isocyanate besteht,
wobei die genannte Pflanzenölfraktion mindestens 1 Massenprozent Traubenkernöl umfasst.

2. Bindemittel nach Anspruch 1, **dadurch gekennzeichnet, dass** die Pflanzenölfraktion 65 bis 72 Massenprozent ist und der Isocyanatanteil 28 bis 35 Massenprozent ist.

3. Bindemittel nach Anspruch 2, **dadurch gekennzeichnet, dass** die Pflanzenölfraktion 67 Massenprozent ist und der Isocyanatanteil 33 Massenprozent ist.

4. Bindemittel nach Anspruch 1, **dadurch gekennzeichnet, dass** die Pflanzenölfraktion 72 bis 75 Massenprozent ist und der Isocyanatanteil 25 bis 28 Massenprozent ist.

5. Bindemittel nach Anspruch 4, **dadurch gekennzeichnet, dass** die Pflanzenölfraktion 73 Massenprozent ist und der Isocyanatanteil 27 Massenprozent ist.

6. Bindemittel nach Anspruch 1, **dadurch gekennzeichnet, dass** die genannte Pflanzenölfraktion aus Traubenkernöl besteht.

7. Bindemittel nach Anspruch 1, **dadurch gekennzeichnet, dass** die genannte Pflanzenölfraktion 5 bis 11 Massenprozent Traubenkernöl umfasst.

8. Bindemittel nach Anspruch 1, **dadurch gekennzeichnet, dass** die genannte Pflanzenölfraktion 12 bis 21 Gew.-% Traubenkernöl umfasst.

9. Bindemittel nach Anspruch 3 oder nach Anspruch 5, **dadurch gekennzeichnet, dass** die genannte Pflanzenölfraktion 16 bis 21 Massenprozent Traubenkernöl umfasst.

10. Bindemittel nach Anspruch 9, **dadurch gekennzeichnet, dass** die Pflanzenölfraktion 21 Massenprozent Traubenkernöl umfasst.

11. Bindemittel nach Anspruch 1, **dadurch gekennzeichnet, dass** die aliphatischen Isocyanate aus der Gruppe ausgewählt werden, die aus Isophorondiisocyanat (IPDI), Hexamethylendiisocyanat (HDI), Pentamethylendiisocyanat (PDI), Dicyclohexylmethandiisocyanat (HMDI) und Kombinationen davon und Trimeren und Biureten davon besteht.

12. Bindemittel nach Anspruch 1, **dadurch gekennzeichnet, dass** die Pflanzenölfraktion Traubenkernöl in Kombination mit einem Öl ausgewählt aus der Gruppe, die aus Rizinusöl, Sojaöl, Sonnenblumenöl, Avocadoöl, Mandelöl, Jojobaöl, Leinöl und Kombinationen davon besteht, umfasst.

13. Verwendung des Bindemittels nach einem der Ansprüche 1 bis 12, **dadurch gekennzeichnet, dass** es bei der Herstellung von agglomerierten Korkstopfen Anwendung findet.

14. Verwendung des Bindemittels nach einem der Ansprüche 1 bis 12, **dadurch gekennzeichnet, dass** es bei der Herstellung von agglomerierten Korkverbundstoffen Anwendung findet.

15. Agglomerierter Korkstopfen, **dadurch gekennzeichnet, dass** er das in einem der Ansprüche 1 bis 12 beanspruchte Bindemittel umfasst.

## Revendications

1. Liant à base d'huile végétale, **caractérisé en ce qu'**il consiste à :
a) 65% à 77% en masse d'une fraction d'huile végétale ; et
b) 23% à 35% en masse d'une fraction d'isocyanates aliphatiques,
dans laquelle ladite fraction d'huile végétale comprend au moins 1 % en masse d'huile de pépins de raisin.

2. Liant selon la revendication 1, **caractérisé en ce que** la fraction d'huile végétale est de 65% à 72% en masse et la fraction d'isocyanate est de 28% à 35% en masse

3. Liant selon la revendication 2, **caractérisé en ce que** la fraction d'huile végétale est de 67% en masse et la fraction d'isocyanate est de 33% en masse.

4. Liant selon la revendication 1, **caractérisé en ce que** la fraction d'huile végétale est de 72% à 75% en masse et la fraction d'isocyanate est de 25% à 28% en masse.

5. Liant selon la revendication 4, **caractérisé en ce que** la fraction d'huile végétale est de 73% en masse et la fraction d'isocyanate est de 27% en masse.

6. Liant selon la revendication 1, **caractérisé en ce que** ladite fraction d'huile végétale consiste à huile de pépins de raisin.

7. Liant selon la revendication 1, **caractérisé en ce que** ladite fraction d'huile végétale comprend de 5 % à 11 % en masse d'huile de pépins de raisin.

8. Liant selon la revendication 1, **caractérisé en ce que** ladite fraction d'huile végétale comprend de 12 % à 21 % en poids d'huile de pépins de raisin.

9. Liant selon la revendication 3 ou la revendication 5, **caractérisé en ce que** ladite fraction d'huile végétale comprend de 16% à 21% en masse d'huile de pépins de raisin.

10. Liant selon la revendication 9, **caractérisé en ce que** la fraction d'huile végétale comprend 21% en masse d'huile de pépins de raisin.

11. Liant selon la revendication 1, **caractérisé en ce que** les isocyanates aliphatiques sont choisis dans le groupe constitué par le diisocyanate d'isophorone (IPDI), le diisocyanate d'hexaméthylène (HDI), le diisocyanate de pentaméthylène (PDI), le diisocyanate de dicyclohexylméthane (HMDI) et leurs combinaisons et leurs trimères et biurets.

12. Liant selon la revendication 1, **caractérisé en ce que** la fraction d'huile végétale comprend de l'huile de pépins de raisin en combinaison avec une huile choisie dans le groupe constitué par l'huile de ricin, l'huile de soja, l'huile de tournesol, l'huile d'avocat, l'huile d'amande, l'huile de jojoba, l'huile de lin et leurs combinaisons.

13. Utilisation du liant selon l'une quelconque des revendications 1 à 12, **caractérisée en ce qu'**elle s'applique à la production de bouchons de liège aggloméré.

14. Utilisation du liant selon l'une quelconque des revendications 1 à 12, **caractérisée en ce qu'**elle s'applique à la production de composites de liège aggloméré.

15. Bouchon de liège aggloméré, **caractérisé en ce qu'**il comprend le liant revendiqué dans l'une quelconque des revendications 1 à 12.
